# EUROPEAN PATENT APPLICATION

(11) **EP 3 530 545 A1**
(43) Date of publication of application: **28.08.2019**
(21) Application number: 17862228.8
(22) Date of filing: 10.10.2017
(51) Int. Cl.: B61H 7/00, H02K 49/02

(54) **EDDY CURRENT RAIL BRAKE**

(30) Priority: 18.10.2016 JP 2016204714
(71) Applicant: Nippon Steel & Sumitomo Metal Corporation, Tokyo 100-8071 (JP)
(72) Inventor: KADOKAWA, Shotaro, Tokyo 100-8071 (JP); YAMAGUCHI, Hiroyuki, Tokyo 100-8071 (JP); IMANISHI, Kenji, Tokyo 100-8071 (JP)
(74) Representative: Zimmermann & Partner Patentanwälte mbB
(86) International application number: PCT/JP2017/036641
(87) International publication number: WO 2018/074280

(57) **Abstract**

Disclosed is an eddy-current rail brake (100) which includes: a magnet array (11) which includes a plurality of permanent magnets (11a) arranged in one row so as to face toward a rail (1) in a braking state; a holding member (12) which holds the magnet array (11), the holding member (12) being supported so as to be rotatable together with the magnet array (11); a cylindrical member (21) which covers the magnet array (11), which is rotatable; and a driving device coupled to an end portion of the holding member (12). The magnet array (11) is switchable between the braking state and a non-braking state by rotating the magnet array (11). The rail brake (100) has high reliability for a long period of time.

## Description

### TECHNICAL FIELD

The present invention relates to an eddy-current rail brake.

### BACKGROUND ART

Usually, for a braking device which decelerates a railway vehicle, a braking device utilizing a frictional force between rails and wheels is used. However, in the case of the braking device utilizing a frictional force, when a force applied at the time of braking exceeds a frictional force, the wheels slide on the rails while the wheels stop rotating. Accordingly, in some cases, it is difficult to brake a railway vehicle (particularly, a railway vehicle at a high speed) within a short distance only with the braking device utilizing a frictional force. Therefore, it has been conventionally proposed to use an eddy-current rail brake by means of permanent magnets in combination (for example, Patent Literatures 1 and 2).

Claim 1 of Patent Literature 1 discloses a brake device which includes an elevatable magnetic pole, and permanent magnets rotatably provided in the magnetic pole.

FIG. 1 of Patent Literature 2 discloses a magnet unit which is used for a rail brake. In the magnet unit, a plurality of permanent magnets are fixed to a ferromagnetic support plate (yoke), and a rod member is provided at the center of the support plate. The rod member has a trunnion. Rotating the rod member about the trunnion causes the permanent magnets fixed to the support plate to rotate.

### CITATION LIST

### PATENT LITERATURE

Patent Literature 1: Japanese Patent Application Publication No. 10-167068
Patent Literature 2: Japanese Patent Application Publication No. 2010-83446

### SUMMARY OF INVENTION

### TECHNICAL PROBLEM

Ballast, such as crushed stone, may scatter and impinge on a permanent magnet of the rail brake, or magnetic powder (wear powder of a rail or the like) or moisture (rain water or the like) may adhere to a permanent magnet of the rail brake. Impingement of the scattered ballast on a magnet damages the magnet, thus reducing a braking force. Further, adhesion of a large amount of magnetic powder inhibits motion of a magnet so that the magnet is prevented from performing a predetermined operation. Accordingly, the magnet may not exhibit a braking force. Further, adhesion of moisture causes a permanent magnet to rust, thus reducing a magnetic force and hence, a braking force may be reduced as a result. There is also a possibility that impingement of a foreign substance damages a permanent magnet. Deterioration or damage of a permanent magnet reduces reliability of the rail brake.

The present invention has been made under the above-mentioned circumstances, and an objective of the present invention is to provide an eddy-current rail brake having high reliability for a long period of time.

### SOLUTION TO PROBLEM

An eddy-current rail brake according to one embodiment of the present invention is an eddy-current rail brake for a railway vehicle. The rail brake includes: a magnet array which includes a plurality of permanent magnets arranged in one row so as to face toward a rail in a braking state; a holding member which holds the magnet array, the holding member being supported so as to be rotatable together with the magnet array; a cylindrical member which covers the entire magnet array, which is rotatable, in a longitudinal direction of the magnet array; and at least one driving device coupled to at least one end portion of the holding member, the driving device being configured to rotate the magnet array. The magnet array is switchable between the braking state and a non-braking state by rotating the magnet array.

### ADVANTAGEOUS EFFECTS OF INVENTION

According to the present invention, it is possible to acquire an eddy-current rail brake having high reliability for a long period of time.

### BRIEF DESCRIPTION OF DRAWINGS

FIG. 1A is a view schematically showing a portion of one example of a rail brake of a first embodiment.
FIG. 1B is a view schematically showing an external appearance of the rail brake shown in FIG. 1A.
FIG. 2 is a view schematically showing one example of a drive mechanism.
FIG. 3A is a view schematically showing a cross section of the rail brake shown in FIG. 1A.
FIG. 3B is a view schematically showing the arrangement of magnets of the rail brake shown in FIG. 1A.
FIG. 4 is a cross-sectional view schematically showing another example of the rail brake of the first embodiment.
FIG. 5 is a view schematically showing another example of the rail brake of the first embodiment.
FIG. 6 is a view schematically showing another example of the rail brake of the first embodiment.
FIG. 7 is a cross-sectional view schematically showing another example of the rail brake of the first embodiment.
FIG. 8 is a cross-sectional view schematically showing another example of the rail brake of the first embodiment.

### DESCRIPTION OF EMBODIMENTS

Hereinafter, an embodiment of the present invention is described. In the description made hereinafter, the embodiment of the present invention is described by taking examples. However, the present invention is not limited to the examples described hereinafter.

### (Eddy-current rail brake)

A rail brake of this embodiment is an eddy-current rail brake for a railway vehicle. The rail brake includes a magnet array, a holding member, a cylindrical member, and at least one driving device. The magnet array includes a plurality of permanent magnets arranged in one row such that the permanent magnets can face toward a rail. The holding member holds the magnet array. The holding member is supported so as to be rotatable together with the magnet array. The cylindrical member covers the entire magnet array, which is rotatable, in the longitudinal direction of the magnet array. The driving device is coupled to at least one end portion of the holding member so as to rotate the magnet array. The magnet array is switchable between a braking state and a non-braking state by rotating the magnet array. Hereinafter, a portion of the cylindrical member which faces toward the magnet array in the braking state may be referred to as "first portion", and a portion of the cylindrical member which faces toward the magnet array in the non-braking state may be referred to as "second portion". Further, each of two portions disposed between the first portion and the second portion may be referred to as "third portion".

The rail brake of this embodiment may further include a ferromagnetic body which is disposed so as to face toward at least a portion of the magnet array in the non-braking state. The ferromagnetic body may be referred to as "ferromagnetic body (F)" hereinafter. The ferromagnetic body (F) can suppress magnetic leakage in the non-braking state.

The types of railway vehicle are not limited, and any railway vehicle is applicable provided that the railway vehicle travels on rails. The rail brake of this embodiment is particularly preferably used for high-speed railways. Usually, the rail brake is used in combination with a general brake utilizing a frictional force.

The plurality of permanent magnets are usually arranged in one row at intervals. The permanent magnet is not limited, and a permanent magnet which can be used in an eddy-current reduction gear may be used. A known permanent magnet may be used. A surface of the permanent magnet which faces toward an inner peripheral surface of the cylindrical member (for example, a circular cylindrical member) may be a curved surface which corresponds to the inner peripheral surface of the cylindrical member. With such a configuration, a distance between the permanent magnet and the rail can be made small in the braking state.

The driving device (actuator) is not limited, and any driving device may be used provided that the driving device can rotate the holding member together with the magnet array. An example of the driving device includes a known actuator. For example, a linear air cylinder, an electric cylinder, and a rotary cylinder are included in the example of the driving device. The driving device may be coupled to the end portion of the holding member by way of a drive mechanism. One example of the drive mechanism is a mechanism which converts motion (for example, reciprocating motion) of the driving device to rotational motion. A known mechanism may be used as the drive mechanism. The rail brake of this embodiment may further include a protective member disposed so as to surround the drive mechanism. In this case, the drive mechanism is protected by the protective member, and the magnet array is protected by the cylindrical member.

In the braking state, the magnet array is disposed at a position where it faces toward a rail. In the non-braking state, the magnet array is disposed at a position where it does not face toward the rail. In one example, a position which is rotated about a rotary shaft of the holding member by 90° from a position of the magnet array in the braking state is assumed as a position of the magnet array in the non-braking state.

The cylindrical member may be a member having a circular cylindrical shape (circular cylindrical member). Alternatively, the cylindrical member may have an angular cylindrical shape, or may have a shape obtained by combining a circular cylinder and an angular cylinder. The cylindrical member is typically a circular cylindrical member. As described above, the cylindrical member includes the first portion and the second portion. Each of these portions is a portion of the cylindrical member. A typical cylindrical member does not include a portion made of a ferromagnetic material which is disposed so as to connect the first portion and the second portion. With such a configuration, it is possible to suppress that a magnetic force of the magnet array in the non-braking state acts on a rail. In one example, the entire cylindrical member is made of a non-magnetic material. In two third portions each of which connects the first portion and the second portion with each other, the non-magnetic material may be disposed so as to traverse the entire third portion in the longitudinal direction. Alternatively, the entire third portion may be made of the non-magnetic material.

In the non-braking state, the rail brake of this embodiment may be moved so as to separate from the rail together with the rotation of the magnet array. For example, in the non-braking state, a rail brake body (the rail brake of this embodiment) may be moved upward. In this case, the rail brake further includes a mechanism for lifting the rail brake body. A known mechanism may be used as this mechanism.

The rail brake of this embodiment may include two driving devices which are respectively coupled to both ends of the holding member. Using the two driving devices facilitates the rotation of the holding member.

The rail brake of this embodiment may include two magnet arrays which are arranged in one row. By driving these two magnet arrays with separate individual driving devices, two magnet arrays can be independently switched between the braking state and the non-braking state. In other words, the intensity of a braking force generated by the rail brake can be changed. In this case, it may be configured such that two end portions of the two magnet arrays which face each other are surrounded by a protective casing, and driving devices are respectively coupled to two end portions of the two magnet arrays which are not surrounded by the protective casing.

The holding member may include a holding plate to which the magnet array is fixed, the holding plate being made of a ferromagnetic material. The holding plate may function as a yoke. Provided that the holding plate has a plate thickness and width such that a magnetic circuit which generates a predetermined braking force can be formed, the size and the material of the holding plate are not limited. A known ferromagnetic material may be used as a ferromagnetic material. For example, steel for machine structure, steel for general structure or the like may be used. The same applies for another ferromagnetic material (and a ferromagnetic body made of a ferromagnetic material) in this specification.

The rail brake of this embodiment may include a frame body which supports the holding member and/or the cylindrical member. In this case, at least a predetermined portion of the frame body may be formed of a ferromagnetic body. The cross section of the frame body may have a shape which includes an L shaped cross section. In this embodiment, "predetermined portion" is a portion which faces toward at least a portion of the magnet array in the non-braking state. In other words, at least a portion of the frame body may be formed of the above-mentioned ferromagnetic body (F). In this embodiment, the cross section of the frame body means a cross section perpendicular to the rotary shaft of the holding member (in other words, a cross section perpendicular to the longitudinal direction of the frame body). The cross section of the frame body may have a shape which includes a U shaped cross section (a U shape having a flat bottom).

The above-mentioned ferromagnetic body (F), which may form a portion of the frame body, may be arranged in a discontinuous manner so as to face, in the non-braking state, toward at least a region between two permanent magnets disposed adjacent to each other. Alternatively, the ferromagnetic body (F) may be arranged in a continuous manner so as to face toward an entire magnet array in the non-braking state. Arranging the ferromagnetic body (F) so as to face toward at least a portion of the magnet array in the non-braking state can suppress leakage of magnetic flux of the magnet array to the outside in the non-braking state.

As described above, an entirety of the cylindrical member may be made of a non-magnetic material. An example of the non-magnetic material includes a non-magnetic resin and non-magnetic metal (austenitic stainless steel, aluminum or the like) (the same applies for another non-magnetic material in this specification). Using the cylindrical member made of a non-magnetic material can prevent the formation of an undesired magnetic circuit.

At least a part out of a portion (first portion) of the cylindrical member which faces toward the magnet array in the braking state may be made of a ferromagnetic material. In this case, the cylindrical member except for the part may be made of a non-magnetic material. Forming at least the part of the first portion using a ferromagnetic material can concentrate magnetic flux toward the rail in the braking state. An example of the position of the part is described later. In a typical example, the part of the cylindrical member (first portion) which is made of the ferromagnetic material is disposed at a position where it faces toward the permanent magnets in the braking state.

The rail brake of this embodiment may further include a scraping member. The scraping member is disposed so as to be in contact with an outer surface of a portion of the cylindrical member where the magnet array passes by in switching the magnet array from the braking state to the non-braking state. The portion where the magnet array passes by is a portion disposed between the first portion and the second portion.

Magnetic powder (wear powder of a rail or the like) is attracted by a magnetic force of the magnet array, thus adhering to an outer surface of the cylindrical member. Such magnetic powder moves along with the rotation of the magnet array. As a result, a load of the rotation of the magnet array may be increased, or the cylindrical member may become worn. Using the above-mentioned scraping member can remove the magnetic powder. The shape of the scraping member is not limited, and the scraping member may have a thin plate shape or a columnar shape. The material for forming the scraping member is not particularly limited. Provided that the advantageous effects of the present invention can be acquired, a non-magnetic material or a ferromagnetic material may be used as the material for forming the scraping member.

The rail brake of this embodiment may further include a columnar ferromagnetic body. The columnar ferromagnetic body is disposed along the outer surface of the portion of the cylindrical member where the magnet array passes by in switching the magnet array from the braking state to the non-braking state. The portion where the magnet array passes by is a portion disposed between the first portion and the second portion. With such a configuration, a force which is required for initial motion in rotating the magnet array can be reduced. Disposing the columnar ferromagnetic body so as to be in contact with the third portion allows the ferromagnetic body to function as a scraping member.

A magnetic pole which faces toward the rail in the braking state may differ between the permanent magnets disposed adjacent to each other. With such a configuration, a strong braking force can be acquired.

Examples of the embodiment of the present invention are described hereinafter with reference to drawings. In the description made hereinafter, identical parts are given the same symbols, and the repeated description may be omitted. Further, in the drawings which are referred to hereinafter, to facilitate the understanding, hatching may be omitted, or only some members may be hatched. As long as the advantageous effect of the present invention can be acquired, a constitutional element in the embodiment described hereinafter may be replaced with another constitutional element described above.

### (First embodiment)

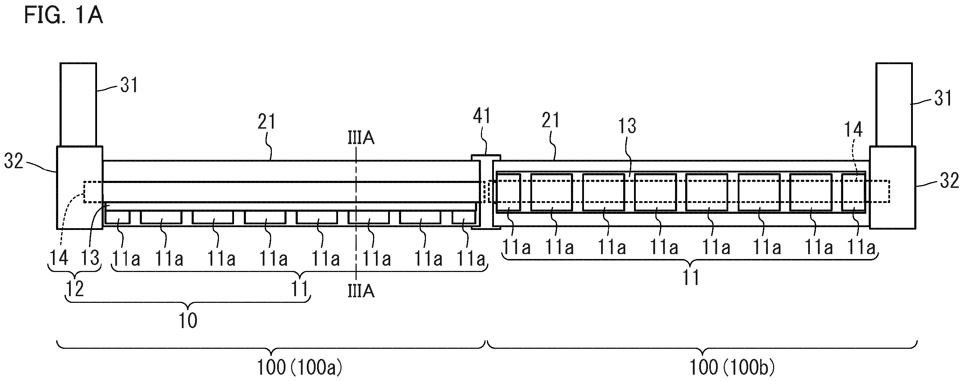

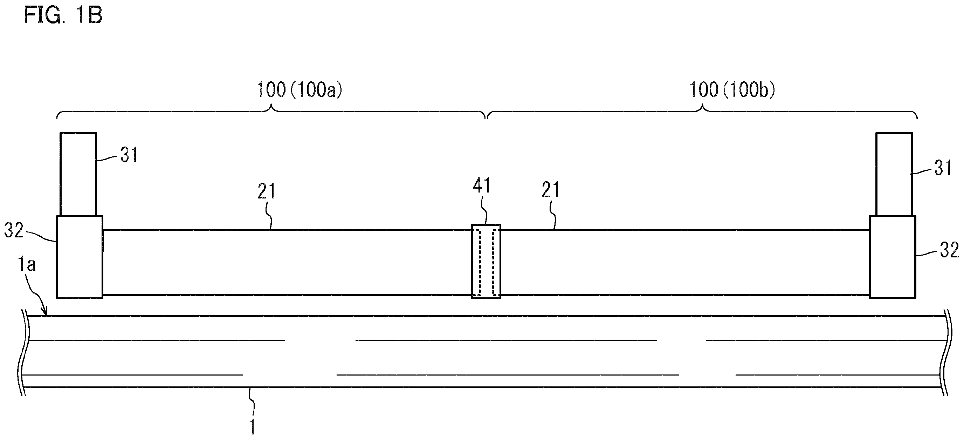

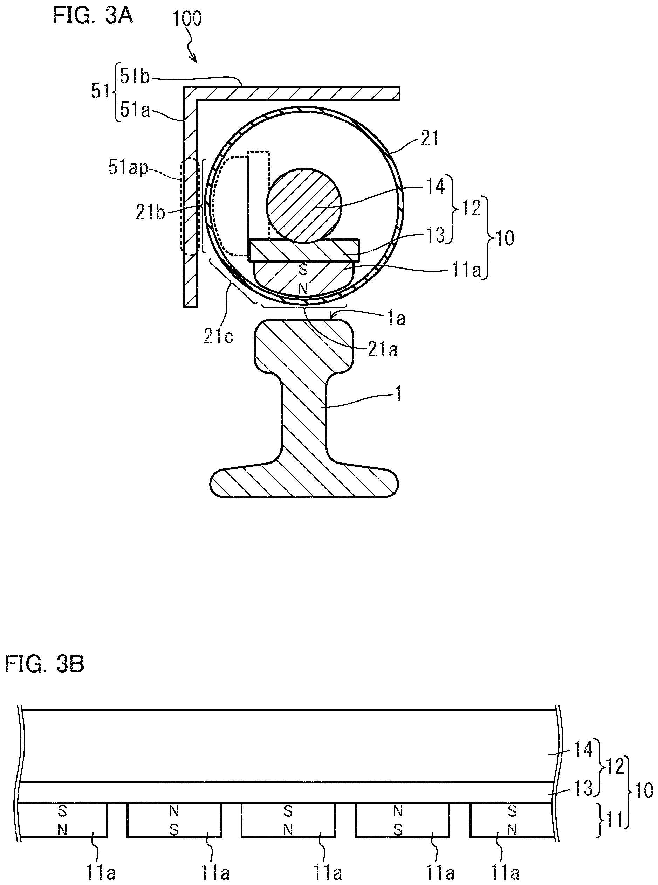

In a first embodiment, one example of the rail brake according to the present invention is described. A part of the configuration of rail brakes 100a and 100b of the first embodiment is schematically shown in FIG. 1A. Further, the external appearance of the part shown in FIG. 1A and a rail 1 are schematically shown in FIG. 1B. In FIG. 1A, only an outer edge of a cylindrical member 21 is shown so as to illustrate the inside of the cylindrical member 21. In FIG. 1A and FIG. 1B, the illustration of a frame body shown in FIG. 3A is omitted.

In the first embodiment, the description is made with respect to one example where the two rail brakes 100a and 100b are connected to each other. However, only one rail brake may be used. Hereinafter, each of the rail brakes 100a and 100b may be referred to as "rail brake 100".

The rail brake 100 is usually fixed to a bogie of a railway vehicle. The rail brake 100 includes a magnet unit 10, the cylindrical member 21, and a driving device 31.

The magnet unit 10 includes a magnet array 11, and a holding member 12 which holds the magnet array 11. The holding member 12 includes a rotary shaft 14 and a holding plate 13. The rotary shaft 14 extends in the longitudinal direction of the magnet array 11. The rotary shaft 14 may be fixed to the holding plate 13 by bolts or the like, or may be fixed to the holding plate 13 by another connecting member.

The magnet array 11 includes a plurality of permanent magnets 11a arranged in one row. A region ranging from the permanent magnet 11a disposed at one end of the magnet array 11 to the permanent magnet 11a disposed at the other end of the magnet array 11 is the region of the magnet array 11. The holding plate 13 holds the magnet array 11 (the plurality of permanent magnets 11a). The holding plate 13 is made of a ferromagnetic material, and functions as a yoke. Both ends of the rotary shaft 14 are rotatably supported by bearings (not shown in the drawing). In other words, the holding member 12 is supported so as to be rotatable together with the magnet array 11. FIG. 1A shows one example of a state where the magnet array 11 of the rail brake 100a is positioned in the braking state, and the magnet array 11 of the rail brake 100b is positioned in the non-braking state.

In one example of the first embodiment, the cylindrical member 21 has a circular cylindrical shape. The cylindrical member 21 covers the entire magnet array 11, which is rotatable, in the longitudinal direction of the magnet array 11. As described above, the entire cylindrical member 21 may be made of a non-magnetic material. In one example shown in FIG. 1A and FIG. 1B, a portion where two cylindrical members 21 face each other is surrounded by a protective cover 41 of a box type.

As shown in FIG. 1B, each cylindrical member 21 is disposed such that the longitudinal direction of the cylindrical member 21 extends along the longitudinal direction of the rail 1, and the cylindrical member 21 is adjacent to an upper surface 1a of the rail 1. The magnet array 11 in the cylindrical member 21 faces toward the upper surface 1a of the rail 1 in the braking state.

The driving device 31 is coupled to the holding member 12 (rotary shaft 14) by a drive mechanism. In FIG. 1A, the illustration of the drive mechanism is omitted. The drive mechanism is surrounded by a protective cover (protective member) 32 of a box type. FIG. 1A shows one example where the driving device 31 is coupled to only one end portion of the holding member 12. However, the rail brake 100 may include two driving devices 31 which are respectively coupled to both ends of the holding member 12.

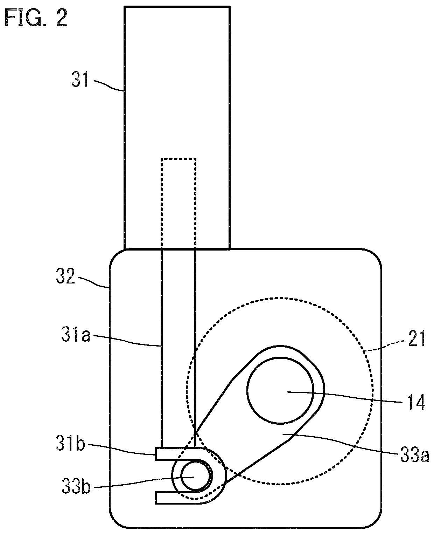

One example of the drive mechanism is schematically shown in FIG. 2. In FIG. 2, the protective cover 32 is shown only as the profile thereof. A U-shaped member 31b is fixed to a distal end of a rod 31a of the driving device 31. The rotary shaft 14 and the U-shaped member 31b are coupled to each other by a connecting member 33a and a pin 33b. The rotary shaft 14 is fixed to one end of the connecting member 33a, and the pin 33b is fixed to the other end of the connecting member 33a. The pin 33b is disposed in the U-shaped member 31b, and is movable in the U-shaped member 31b. When the driving device 31 is driven so as to cause the rod 31a to perform linear motion (reciprocating motion), the pin 33b moves along with the linear motion of the rod 31a. As a result, the rotary shaft 14 is rotated. Along with the rotation of the rotary shaft 14, the magnet unit 10 (magnet array 11) rotates about the rotary shaft 14.

A cross section taken along line IIIA-IIIA in FIG. 1A is schematically shown in FIG. 3A. A side view of the magnet unit 10 is schematically shown in FIG. 3B. The magnet unit 10 rotates about the rotary shaft 14 so as to move between the position in the braking state shown in FIG. 3A and the position in the non-braking state indicated by a dotted line in FIG. 3A.

In one example shown in this embodiment, the permanent magnets 11a are arranged in one row at certain intervals. Further, each permanent magnet 11a is disposed such that the direction from the south pole to the north pole extends parallel to the radial direction of a circle about the rotary shaft 14. Hereinafter, the direction from the south pole to the north pole may be referred to as "magnetic pole direction". The permanent magnets 11a disposed adjacent to each other differ from each other in which magnetic pole faces toward the upper surface 1a of the rail 1 at the time of braking. In other words, the plurality of permanent magnets 11a are arranged in one row such that the magnetic pole directions are alternately reversed. Arranging the permanent magnets 11a in this manner allows a higher braking force to be acquired.

As shown in the cross section in FIG. 3A, a portion of the permanent magnet 11a which faces toward an inner peripheral surface of the cylindrical member 21 has an arc shape in cross section which corresponds to the inner peripheral surface of the cylindrical member 21.

Referring to FIG. 3A, the rail brake 100 includes a frame body 51 made of a ferromagnetic material. The holding member 12 and/or the cylindrical member 21 are supported by the frame body 51 at portions not shown in the drawing. In other words, the frame body 51 functions as a structural member which supports the holding member 12 and/or the cylindrical member 21. The frame body 51 has a shape which can suppress the formation of an undesired magnetic circuit. In one example shown in FIG. 3A, the frame body 51 has an L shape in cross section.

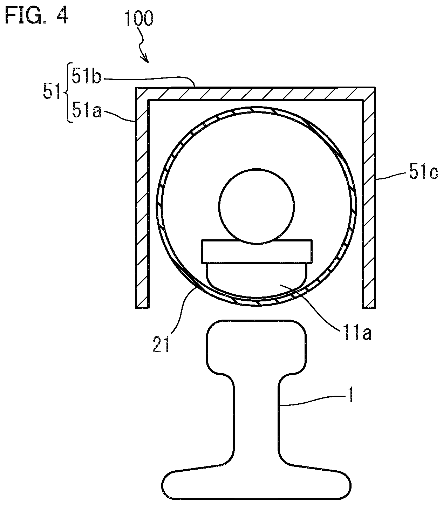

The frame body 51 having an L shape in cross section includes a plate shaped portion 51a which faces toward the magnet array 11 in the non-braking state, and a plate shaped portion 51b which is disposed on a side opposite to the rail 1 with the cylindrical member 21 interposed therebetween. As shown in FIG. 4, the frame body 51 may have a U shape (a U shape having a flat bottom) in cross section. The frame body 51 having a U shape in cross section includes, in addition to the plate shaped portion 51a and the plate shaped portion 51b, a plate shaped portion 51c disposed on a side opposite to the plate shaped portion 51a with the cylindrical member 21 interposed therebetween.

The entire frame body 51 may form a ferromagnetic body. Alternatively, only a portion of the frame body 51 may form a ferromagnetic body, and other portions of the frame body 51 may be made of a non-magnetic material. In this case, using a non-magnetic metal material (a non-magnetic metal material having a light weight such as aluminum, for example) as a material for forming the frame body 51 can reduce the weight of the rail brake.

Referring to FIG. 3A, a portion 51ap of the frame body 51 is a portion which faces toward the magnet array 11 in the non-braking state. It is preferable to form at least the portion 51ap using a ferromagnetic body (F). Forming the portion 51ap using a ferromagnetic material can suppress magnetic leakage in the non-braking state.

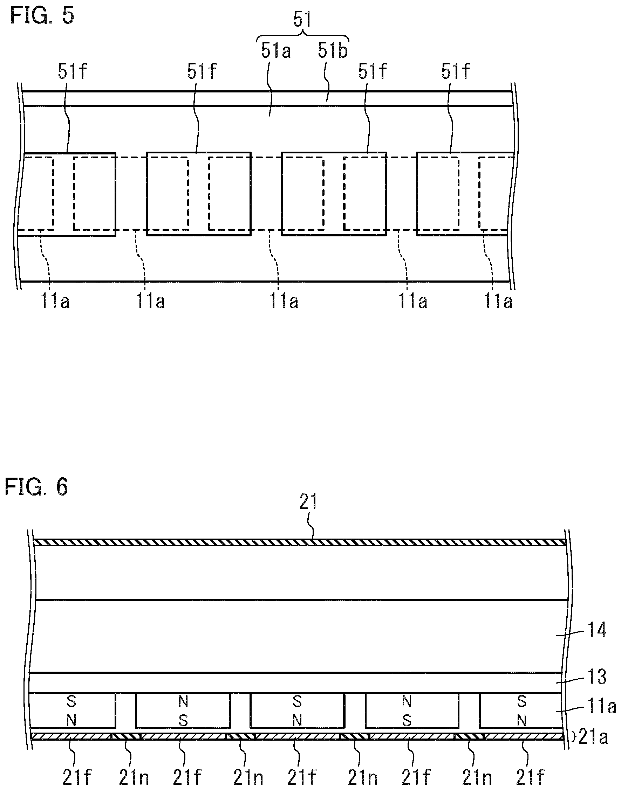

At least a part (an entirety, for example) of the portion 51ap may be formed of a ferromagnetic body (F), and other parts of the portion 51ap, if any, may be made of a non-magnetic material. The ferromagnetic body (F) may be arranged in a continuous manner in the portion 51ap. Alternatively, the ferromagnetic body (F) may be arranged in a discontinuous manner. To be more specific, as shown in FIG. 5, ferromagnetic bodies 51f may be arranged in a discontinuous manner such that each ferromagnetic body 51f faces toward at least a region between two permanent magnets 11a disposed adjacent to each other. FIG. 5 is a view schematically showing the arrangement of the ferromagnetic bodies 51f, and is also a view of the frame body 51 as viewed from a side surface. For reference, in FIG. 5, the arrangement of the permanent magnets 11a in the non-braking state is indicated by a dotted line. As shown in FIG. 5, each ferromagnetic body 51f is disposed so as to straddle over the region between end portions of two permanent magnets 11a disposed adjacent to each other. Arranging the ferromagnetic bodies 51f in this manner forms a closed magnetic circuit between the two permanent magnets 11a disposed adjacent to each other and the ferromagnetic body 51f which faces toward the region between the two permanent magnets 11a. As a result, it is possible to suppress leakage of magnetic flux, generated from the permanent magnets 11a, to the outside in the non-braking state.

As shown in FIG. 3A, the cylindrical member 21 includes a first portion 21a which faces toward the magnet array 11 in the braking state, and a second portion 21b which faces toward the magnet array 11 in the non-braking state. The cylindrical member 21 has a cylindrical shape so that two regions are present between the first portion 21a and the second portion 21b. Each of these regions is the above-mentioned "third portion". FIG. 3A shows the third portion 21c of the two third portions, wherein the third portion 21c is disposed on a side where the magnet array 11 passes by in switching the magnet array 11 between the braking state and the non-braking state.

When the entire third portion is made of a ferromagnetic material, magnetic leakage from the permanent magnet 11a in the non-braking state may cause a problem. Accordingly, the cylindrical member 21 has a configuration which can suppress transmission of the magnetism of the magnet array 11 in the non-braking state to a rail through the cylindrical member 21. To be more specific, each of the two third portions includes a non-magnetic body portion (a portion made of a non-magnetic material) which extends over the entire cylindrical member 21 in the longitudinal direction. The all of the two third portions may be made of a non-magnetic material.

The entire cylindrical member 21 may be made of a non-magnetic material. Alternatively, a portion of the first portion 21a may be made of a ferromagnetic material. Forming the portion of the first portion 21a using a ferromagnetic material facilitates application of magnetic flux to a rail in the braking state. One example of the configuration of the rail brake in such a case is schematically shown in FIG. 6. FIG. 6 shows a cross section taken along the longitudinal direction. In FIG. 6, only the cylindrical member 21 is hatched. In the first portion 21a, ferromagnetic bodies 21f are arranged in a discontinuous manner. Each ferromagnetic body 21f is disposed at a position where it faces toward each permanent magnet 11a, but is not disposed at a position where it faces toward a region 21n between two permanent magnets 11a disposed adjacent to each other. With such a configuration, it is possible to prevent the formation of a closed magnetic circuit between two permanent magnets 11a disposed adjacent to each other and the ferromagnetic body 21f.

In the rail brake 100 of the first embodiment, the entire magnet array 11 is protected by the cylindrical member 21. In such a case where the holding member 12 and the magnet array 11 are rotated by the driving device 31 which is coupled to the center of the holding member 12 by way of a rod member (configuration shown in FIG. 1 of Patent Literature 2), it is not easy to surround the entire magnet array 11. When the entire magnet array 11 is surrounded by a casing in such a case, the casing becomes complicated and, at the same time, the weight of the casing increases. On the other hand, in the rail brake 100, the driving device 31 is coupled to the end portion of the holding member 12. Accordingly, the entire magnet array 11 can be easily covered by the cylindrical member 21. Surrounding the magnet array 11 by the cylindrical member 21 can suppress lowering of a braking force caused due to the deterioration or the like of the permanent magnets.

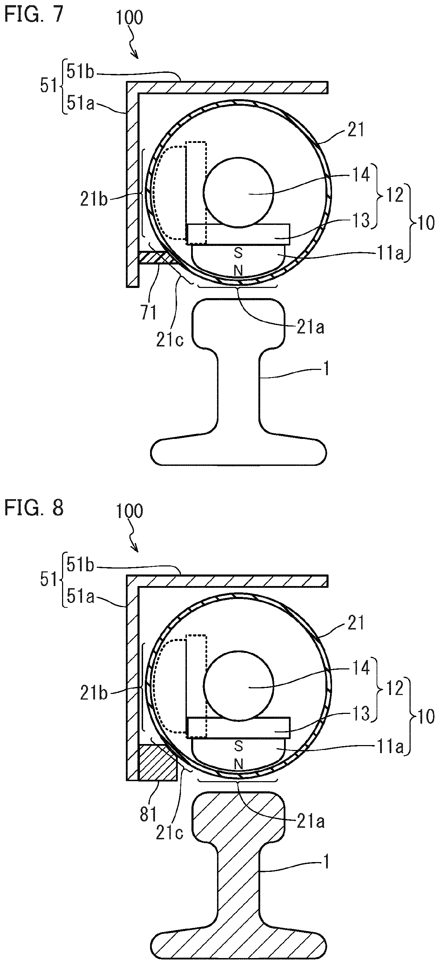

The rail brake 100 may further include a scraping member which is in contact with the third portion 21c of the cylindrical member 21. One example of the configuration of such a rail brake 100 is schematically shown in FIG. 7. FIG. 7 shows a cross section perpendicular to the longitudinal direction. A scraping member 71 has a length equal to or more than the length of the magnet array 11. The scraping member 71 is disposed so as to be in contact with the third portion 21c, and to extend along the longitudinal direction of the cylindrical member 21. As described above, the third portion 21c is one of the two third portions, which are disposed between the first portion 21a and the second portion 21b, and is disposed on a side where the magnet array 11 passes by when the magnet array 11 rotates. Magnetic powder which is attracted by the permanent magnets 11a, and which adheres to an outer peripheral surface of the cylindrical member 21 is scraped by the scraping member 71 when the magnet array 11 moves from the position in the braking state to the position in the non-braking state.

The rail brake 100 may also include a columnar ferromagnetic body which is disposed along an outer surface of the third portion 21c of the cylindrical member 21. One example of the configuration of such a rail brake 100 is schematically shown in FIG. 8. FIG. 8 shows a cross section perpendicular to the longitudinal direction. A columnar ferromagnetic body 81 is disposed along the longitudinal direction of the cylindrical member 21. Further, the ferromagnetic body 81 is disposed at a position where it faces toward the third portion 21c. For the ferromagnetic body 81, one ferromagnetic body having a length equal to or more than the length of the magnet array 11 may be used, or a plurality of ferromagnetic bodies each having the length which corresponds to each permanent magnet 11a (for example, substantially the same length) may be used. Using the ferromagnetic body 81 can reduce a driving force which is required in starting the movement of the magnet array 11 from a position in the braking state to a position in the non-braking state. Further, as shown in FIG. 8, disposing the ferromagnetic body 81 so as to be in contact with the third portion 21c allows the ferromagnetic body 81 to function as a scraping member.

### INDUSTRIAL APPLICABILITY

The eddy-current rail brake of the present invention can be used for a railway vehicle.

### REFERENCE SIGNS LIST

- 1: rail
- 10: magnet unit
- 11: magnet array
- 11a: permanent magnet
- 12: holding member
- 13: holding plate
- 14: rotary shaft
- 21: cylindrical member
- 21a: first portion
- 21b: second portion
- 21c: third portion
- 31: driving device
- 51: frame body
- 51f: ferromagnetic body
- 71: scraping member
- 81: columnar ferromagnetic body
- 100, 100a, 100b: rail brake

## Claims

1. An eddy-current rail brake for a railway vehicle, the eddy-current rail brake comprising:
a magnet array which includes a plurality of permanent magnets arranged in one row so as to face toward a rail in a braking state;
a holding member which holds the magnet array, the holding member being supported so as to be rotatable together with the magnet array;
a cylindrical member which covers the entire magnet array, which is rotatable, in a longitudinal direction of the magnet array; and
at least one driving device coupled to at least one end portion of the holding member, the driving device being configured to rotate the magnet array, wherein
the magnet array is switchable between the braking state and a non-braking state by rotating the magnet array.

2. The eddy-current rail brake according to claim 1, wherein the holding member includes a holding plate to which the magnet array is fixed, the holding plate being made of a ferromagnetic material.

3. The eddy-current rail brake according to claim 1 or 2, further comprising a frame body which supports the holding member and the cylindrical member, wherein
at least a portion of the frame body which faces toward at least a portion of the magnet array in the non-braking state is formed of a ferromagnetic body.

4. The eddy-current rail brake according to claim 3, wherein
the ferromagnetic body is arranged in a discontinuous manner so as to face, in the non-braking state, toward at least a region between the permanent magnets disposed adjacent to each other.

5. The eddy-current rail brake according to any one of claims 1 to 4, wherein
an entirety of the cylindrical member is made of a non-magnetic material.

6. The eddy-current rail brake according to any one of claims 1 to 4, wherein
at least a part out of a portion of the cylindrical member which faces toward the magnet array in the braking state is made of a ferromagnetic material, and the cylindrical member except for the part is made of a non-magnetic material.

7. The eddy-current rail brake according to claim 6, wherein
the part of the cylindrical member which is made of the ferromagnetic material is disposed at a position where it faces toward the permanent magnets in the braking state.

8. The eddy-current rail brake according to any one of claims 1 to 7, further comprising a scraping member, wherein the scraping member is disposed so as to be in contact with an outer surface of a portion of the cylindrical member where the magnet array passes by in switching the magnet array from the braking state to the non-braking state.

9. The eddy-current rail brake according to any one of claims 1 to 8, further comprising a columnar ferromagnetic body, wherein the columnar ferromagnetic body is disposed along the outer surface of the portion of the cylindrical member where the magnet array passes by in switching the magnet array from the braking state to the non-braking state.

10. The eddy-current rail brake according to any one of claims 1 to 9, wherein
a magnetic pole which faces toward the rail in the braking state differs between the permanent magnets disposed adjacent to each other.
